# EUROPEAN PATENT APPLICATION

(11) **EP 1 684 491 A2**
(43) Date of publication of application: **26.07.2006**
(21) Application number: 06001258.0
(22) Date of filing: 20.01.2006
(51) Int. Cl.: H04M 1/02

(54) **Hinge device for mobile terminal**

(30) Priority: 20.01.2005 KR 2005005453
(71) Applicant: Samsung Electronics Co., Ltd., Suwon-si, Gyeonggi-Do (KR)
(72) Inventor: Jeun, Young-Mok, Yeongtong-gu, Suwon-si, Gyeonggi-do (KR); Lee, Yong-Jin, Yeongtong-gu, Suwon-si, Gyeonggi-do (KR); Yi, Young-Jin, Yeongtong-gu, Suwon-si, Gyeonggi-do (KR); Jung, Duk-Won, Yeongtong-gu, Suwon-si, Gyeonggi-do (KR)
(74) Representative: Grünecker, Kinkeldey, Stockmair & Schwanhäusser Anwaltssozietät

(57) **Abstract**

A hinge device in a mobile terminal having a first housing and a second housing. The hinge device includes: a hinge housing mounted to the second housing; a cam housing received in the hinge housing to be linearly movable and having a stopper protruded outward from the hinge housing; a drive component received in the hinge housing and generating a rotation force acting in a direction that the second housing is getting away from the first housing within a predetermined range of rotation; and a hinge dummy mounted to the first housing and having a stopper groove for restricting the movement of the stopper. The second housing stops rotation at least one time by the interruption of the stopper and the stopper groove within a full range receiving the rotation force acting in a direction to be away from the first housing.

## Description

### BACKGROUND OF THE INVENTION

### 1. Field of the Invention

The present invention relates generally to a mobile terminal, and more particularly to a hinge device for use in a mobile terminal to enable a pair of housings to be opened at different angles.

### 2. Description of the Related Art

Generally, mobile terminals are handheld devices used for wireless communications between users or between a user and a service provider through a base station. Mobile terminals can offer various functions or services, including voice communication, short message service, mobile banking, TV broadcasts, online games, video-on-demand, and content data transmissions.

Further, mobile terminals are commonly classified into a bar type, a flip type, and a folder type according to their shapes. A bar-type mobile terminal has a single housing provided with data input/output means such as a communication circuit, a mouthpiece, and an earpiece. A flip-type mobile terminal has a bar-shaped housing and a flip cover rotatably connected to the housing. A folder-type mobile terminal has a pair of housings, i.e., a main housing and a folder rotatable about the main housing, provided with input/output means properly distributed thereon.

Recently, however, new designs with improved portability and convenience, such as a swing type and a slide type, have been launched to meet the diverse needs and tastes of users. The slide type has a pair of housings, one of which slides on the other facing housing in a longitudinal direction to open or close the other housing. The swing type has a pair of facing housings, one of which swivels on the other facing housing. Accordingly, such diverse types of mobile terminals are obvious to and easily understandable by those skilled in the relevant art.

The flip type and the folder type include a hinge device for rotatably coupling a flip cover or a folder to a main housing. Generally, such a hinge device is installed between the flip cover or the folder and the main housing to provide a rotating axis of the flip cover or the folder and generate a rotation force acting in accordance with a rotary angle of the flip cover or the folder. For example, a folder type mobile terminal may be constructed in such a fashion that one housing is provided with a pair of spaced side hinge arms and the other housing with a center hinge arm rotatably coupled between the two side hinge arms. In the folder type mobile terminal, a hinge device can be mounted in the side hinge arms or the center hinge arm to provide a rotating axis and generate a rotation force. Various types of hinge devices are disclosed in the prior art references, including U.S. Patent No. 6,292,980 (September 25, 2001).

Recently, mobile terminals with a built-in camera module have gained popularity among users. The camera module can be a swing type that swivels on a mobile terminal or a fixed type that is fixed to one housing of the mobile terminal. A swing type camera can be swiveled at various angles and directions, thereby providing convenience to take photographs. However, frequent swivels may reduce the life of the camera. Also, the swing type camera can easily be broken down by an external impact. Although a fixed type camera allowing photographs only in a fixed direction is less convenient to use, it has little risks of damage or life reduction as compared to the swing type.

Folder type mobile terminals that prevail on the market are generally configured to be opened up to an angle of about 150°. A fixed type camera module can be mounted in any of the two housings of a folder type mobile terminal. However, when the camera module is mounted in the main housing, rather than in the folder housing, it is particularly inconvenient for the user to take photographs.

More specifically, if a folder type mobile terminal having a fixed type camera module in a first housing and a display unit in a second housing is opened to an angle of 150°, the angle of camera to an object will be different from the angle at which the user views images on the display unit, which will result in inconvenience in taking photographs. Even if the camera module is mounted in the second housing with the display unit, the 150° open angle will cause inconvenience to the user when pressing buttons to photograph.

### SUMMARY OF THE INVENTION

Accordingly, the present invention has been designed to solve the above and other problems occurring in the prior art. An object of the present invention is to provide a hinge device for use in a mobile terminal having a pair of facing housings, one of which can rotate in a direction to be closer to or away from the other, the hinge device being configured to open one housing to different angles in a call mode and a camera mode.

In order to accomplish the above and other objects of the present invention, there is provided a mobile terminal having a first housing, a second housing facing the first housing and rotatable to and away from the first housing, and a hinge device rotatably connecting the second housing to the first housing. The hinge device includes: a hinge housing mounted to the second housing; a cam housing received in the hinge housing to be linearly movable and having a stopper protruded outward from the hinge housing; a drive component received in the hinge housing and generating a rotation force acting in a direction that the second housing is getting away from the first housing within a predetermined range of rotation; and a hinge dummy mounted to the first housing and having a stopper groove for restricting the movement of the stopper. The second housing stops rotation at least one time by the interruption of the stopper and the stopper groove within a full range receiving the rotation force acting in a direction to be away from the first housing.

In accordance with another aspect of the present invention, there is provided a hinge device for use in a mobile terminal having a pair of facing housings, one of which is rotatable in to and away from the other. The hinge device includes: a hinge housing; a cam housing received in the hinge housing to be linearly movable and having a stopper protruded outward from the hinge housing; a drive component received in the hinge housing and generating a rotation force; a hinge dummy having a stopper groove for restricting the movement of the stopper; and a push button for linearly moving the cam housing and thereby pushing the stopper into the hinge housing. The pair of housings stop rotation at least one time by the interruption of the stopper and the stopper groove within a full range receiving the rotation force acting in a direction that the pair of housings are getting away from each other.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view illustrating a mobile terminal having a hinge device according to a preferred embodiment of the present invention;
FIG. 2 is an exploded perspective view illustrating the hinge device in FIG. 1;
FIG. 3 is an exploded perspective view illustrating a drive component of the hinge device in FIG. 2;
FIG. 4 is a side cross-sectional view illustrating a drive component of the hinge device in FIG. 3, which is received in a cam housing;
FIG. 5 is an assembled perspective view illustrating the hinge device in FIG. 2;
FIG. 6 is an assembled perspective view illustrating a first portion of the hinge device in FIG. 2;
FIG. 7 is an assembled perspective view illustrating a second portion of the hinge device in FIG. 2;
FIGs. 8 to 10 illustrate the operation of the hinge device in FIG. 2; and
FIG. 11 is a cam diagram illustrating a drive component of the hinge device in FIG. 2.

### DETAILED DESCRIPTION OF THE PREFERRED EMBODIMENT

Preferred embodiments of the present invention will be described in detail herein below with reference to the accompanying drawings. In the following description of the present invention, a detailed description of known functions and configurations incorporated herein will be omitted when it may obscure the subject matter of the present invention.

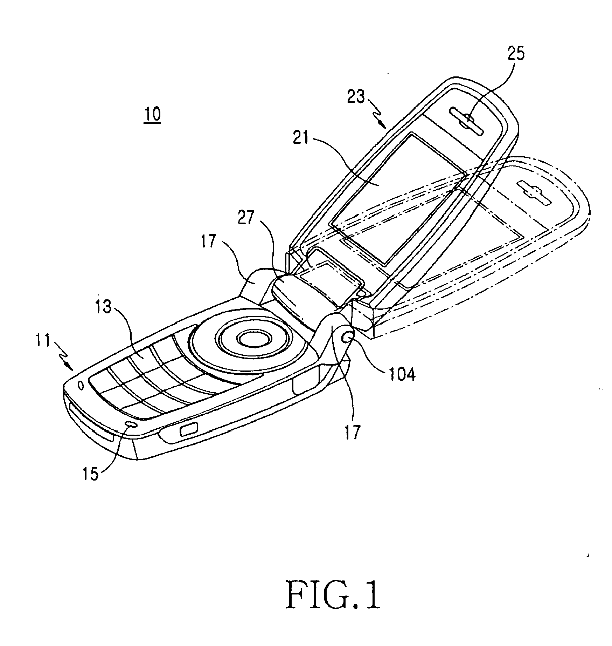

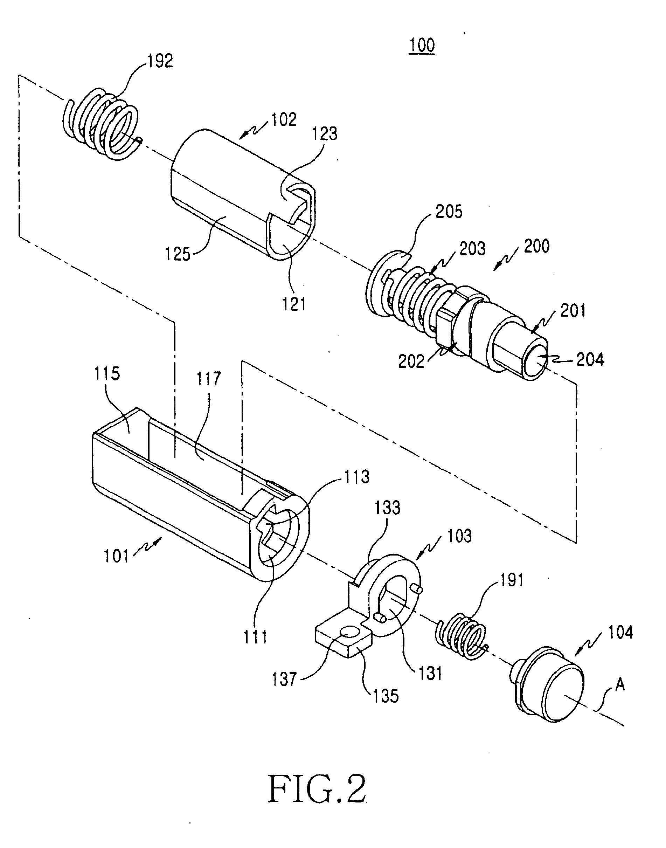

FIG. 1 is a perspective view illustrating a mobile terminal 10 having a hinge device 100, see FIG. 2, according to a preferred embodiment of the present invention. As illustrated in FIG. 1, the mobile terminal is a folder type having a first housing 11 and a second housing 23 connected to the first housing to be rotatable to and away from the front surface of the first housing 11.

The first housing 11 includes a mouthpiece 15 and a keypad 13 on the front surface thereof. A pair of side hinge arms 17 is provided at the upper part of the first housing 11 in such a manner that they face each other at a distance.

The second housing 23 includes a display unit 21 and an earpiece 25 on a surface that faces the front surface of the first housing 11. Also, the second housing 23 includes a center hinge arm 27, which is rotatably interposed between the side hinge arms 17. The hinge device 100 is mounted in the center hinge arm 27 and connected to the side hinge arms 17, such that it can provide a rotation force acting in a direction that the second housing 23 gets closer to or away from the first housing 11.

With the rotation of the second housing 23 to or away from the first housing 11, the keypad 13 and the mouthpiece 15 provided on the front surface of the first housing 11 are closed or exposed, respectively.

FIG. 2 is an exploded perspective view illustrating the hinge device 100 according to a preferred embodiment of the present invention. The hinge device 100 used in the mobile terminal 10 as illustrated in FIG. 1 can provide a rotation force acting in such a direction that the second housing 23 is getting closer to or away from the first housing 11.

The hinge device 100 includes a hinge housing 101, a cam housing 102, a hinge dummy 103, and a push button 104. A drive component 200 is inserted in the hinge housing 101 to generate a rotational force acting on the second housing 23.

The hinge housing 101 has a receiving space 115 for receiving the cam housing 102 and the drive component 200. The hinge housing 101 also has an opened end with a shaft hole 111 and a stopper hole 113, which is cut along the periphery of the shaft hole 111 at a predetermined angle.

The cam housing 102 is a cylindrical shape having an opened end 121 with a longitudinally extended stopper 123. The cam housing 102 is received within the hinge housing 101 in such a manner that it can linearly move in the hinge housing 101. The stopper 123 protrudes outward from the hinge housing 101 through the stopper hole 113. The cam housing 102 can only move linearly in the hinge housing 101.

To restrict rotation and allow only the linear movement of the cam housing 102, the inner wall of the hinge housing 101 is at least partially planar. Also, the outer wall of the cam housing 102 includes a planar surface 125 corresponding to a planar surface 117 on the inner wall of the hinge housing 101. The planar surfaces 117 and 125 allow the cam housing 102 to be linearly movable within the hinge housing 101, restricting the rotation of the cam housing 102.

A second elastic means 192 is mounted in the hinge housing 101. The second elastic means 192 has one end supported by an end wall of the hinge housing 101 and the other end supported by a closed end of the cam housing 102. The second elastic means 192 generates an elastic force acting in a direction that the stopper 123 of the cam housing 102 projects outward from the hinge housing 101. The opened end of the cam housing 102 is supported by the inner wall having the shaft hole 111 of the hinge housing 101.

The drive component 200 for providing a rotation force for the cam housing 102 is inserted in the cam housing 102 and then received in the hinge housing 101.

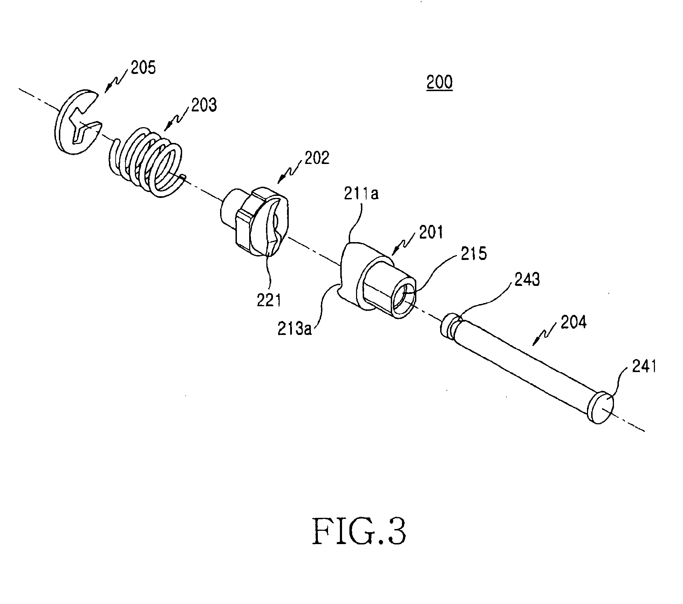

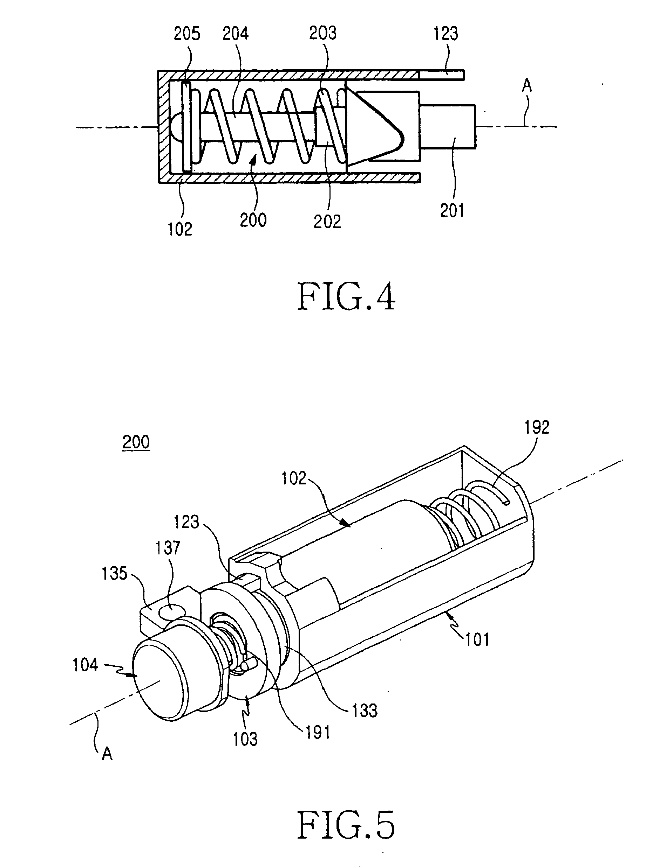

Referring to FIGs. 3 and 4, the drive component 200 includes a hinge shaft 201, a hinge cam 202, and a third elastic means 203 that can be assembled into a single module by means of a connection shaft 204.

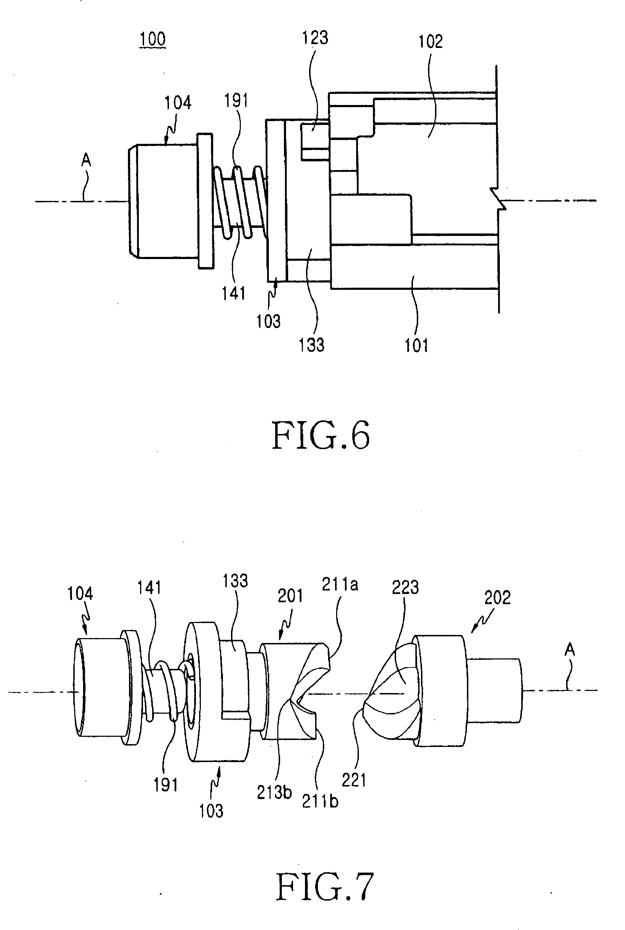

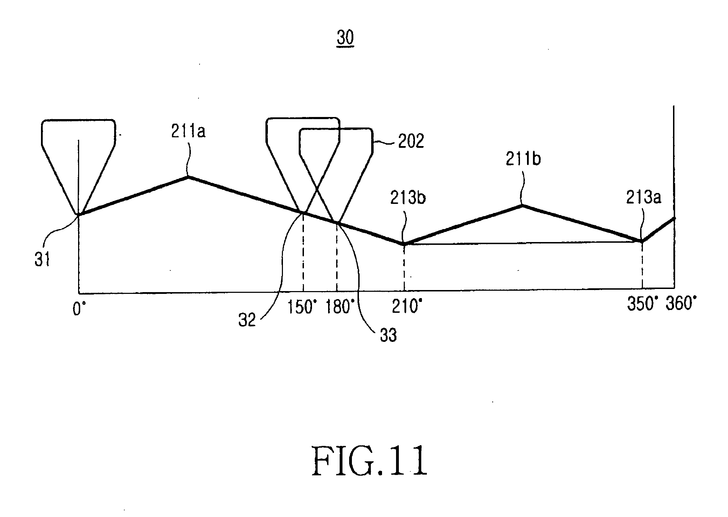

Further referring to FIGs. 7 and 11, the hinge shaft 201 is rotatable in the hinge housing 101. One end of the hinge shaft 201 protrudes outward through the shaft hole 111 of the hinge housing 101. The hinge shaft 201 rotates along a hinge axis A of the drive component 200 and has a first connection hole 215 formed in the direction of hinge axis A. On the other end of the hinge shaft 201, a pair of mountain-shaped portions 211a and 211b and a pair of valley-shaped portions 213a and 213b (see FIG. 7) are formed in turn along the periphery of the hinge shaft 201. It is assumed that a first valley-shaped portion 213a, a first mountain-shaped portion 211a, a second valley-shaped portion 213b, and a second mountain-shaped portion 211b are sequentially formed along the periphery of the hinge shaft 201.

The angle of circumference across the first valley-shaped portion 213a, first mountain-shaped portion 211a, and second valley-shaped portion 213b is set to be 220°, whereas the angle of circumference across the second valley-shaped portion 213b, second mountain-shaped portion 211b, and first valley-shaped portion 213a is 140°. Each valley-shaped portion 213a or 213b and each adjacent mountain-shaped portion 211a or 211b are connected by a slope.

The hinge cam 202 receives an elastic force acting in a direction to become closer to the hinge shaft 201 and is linearly movable within the hinge housing 101, and more particularly within the cam housing 102. The hinge cam 202 has a cam projection 221 at one end thereof and a second connection hole 223 (see FIG. 7) formed in the direction of hinge axis A. The elastic force acting on the hinge cam 202 makes the cam projection 221 slidingly contact with the end of the hinge shaft 201 having the valley-shaped portions 213a and 213b and the mountain-shaped portions 211a and 211b. That is, the hinge cam 202 is maintained in close contact with the hinge shaft 201. With the rotation of the hinge shaft 201, the cam projection 221 slidingly contacts the end of the hinge shaft 201.

The hinge shaft 201, hinge cam 202, and third elastic means 203 are connected by the connection shaft 204 inserted in the direction of hinge axis A to form a single module.

The connection shaft 204 penetrates sequentially into the hinge shaft 201, hinge cam 202, and third elastic means 203. The connection shaft 204 has one end supported by the hinge shaft 201 and the other end with an E-ring 205 coupled thereto. The E-ring 205 supports one end of the third elastic means 203 to prevent the third elastic means 203 from being released out. While a flange 241 is provided to said one end of the connection shaft 204 to be supported by the hinge shaft 201, a connection groove 243 is formed at the other end of the connection shaft 204 for the engagement of the E-ring 205.

When the hinge shaft 201 in the drive component 200 rotates, the cam projection 221 slidingly contacts with and moves along the valley-shaped portions 213a and 213b, mountain-shaped portions 211a and 211b, and slopes therebetween, thereby making the hinge cam 202 linearly move along the connection shaft 204.

FIG. 4 is a view illustrating the drive component 200 received in the cam housing 102. The drive component 200 is first assembled into a separate module and then received in the cam housing 102. The cam housing 102 has the planar surface 125 at least partially on the inner wall and on the outer wall thereof in order to restrict rotation of the hinge cam 202. The hinge cam 202 also has a planar surface at least partially on its outer periphery to correspond to the planar surface on the inner wall of the cam housing 102. Accordingly, the hinge cam 202 is restricted to rotate and allowed only to move linearly within the cam housing 102.

When the drive component 200 is received in the cam housing 102, one end of the connection shaft 204 contacts the inner wall of the closed end of the cam housing 102.

Referring to FIGs. 2 and 6, the hinge dummy 103 has a fixing hole 131 for accepting one end of the hinge shaft 201 protruded outward from the hinge housing 101 and a stopper groove 133 cut at a predetermined angle of circumference on the outer periphery thereof. Because the stopper 123 protruding outward from the hinge housing 101 is placed on the stopper groove 133, its range of movement is restricted.

When the hinge housing 101 rotates with the hinge dummy 103 and the hinge shaft 201 being fixed, the hinge cam 202 and the second housing 23 rotate relatively around the hinge shaft 201. Because the hinge cam 202 receives an elastic force acting in a direction to be closer to the hinge shaft 201, a rotation force is generated to rotate the hinge housing 101 in a direction to locate the cam projection 221 at the first or second valley-shaped portion 213a or 213b.

The hinge housing 101, having the cam housing 102 and the drive component 200 received therein, is inserted into the center hinge arm 27 in the direction of hinge axis A. The hinge dummy 103 is then mounted in one of the side hinge arms 17 ("right side hinge arm 17"). As a means for fixing the hinge dummy 103 in the right side hinge arm 17, a connection piece 135 with a connection hole 137 can be formed on the outer periphery of the hinge dummy 103.

The push button 104 is mounted in the right side hinge arm 17 to be located adjacent to the hinge dummy 103. The outer side of the push button 104 protrudes outward from the outer side of the right side hinge arm 17. The push button 104 has an operation projection 141 on the inner side thereof. When the hinge shaft 201 is inserted in the fixing hole 131 of the hinge dummy 103 and the push button 104 is mounted in the right side hinge arm 17, the operation projection 141 comes into contact with one end of the connection shaft 204. Therefore, when a user presses the push button 104, the connection shaft 104 is pushed back into the hinge housing 101. The pressed push button 104 is projected again outward from the right side hinge arm 17 due to a first elastic means 191 provided between the hinge dummy 103 and the push button 104.

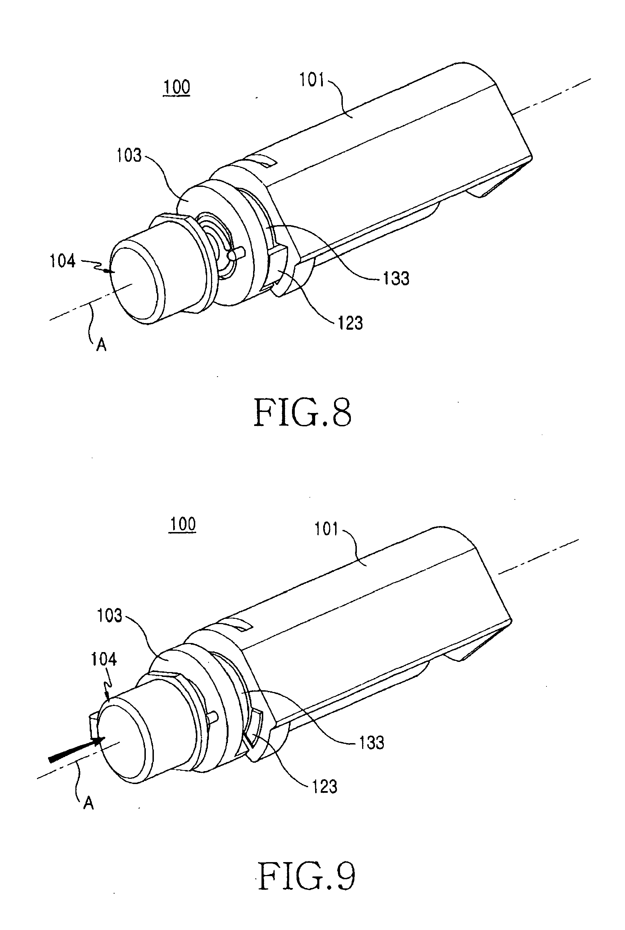

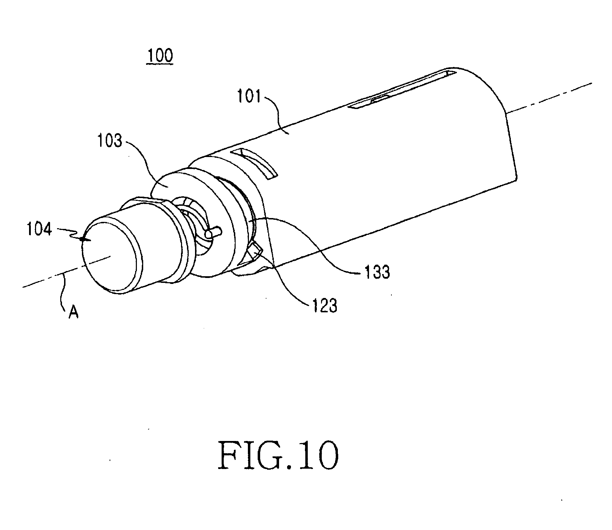

The above structure of the hinge device 100 enables the second housing 23 to rotate, stop rotation at least one time and rotate to a further angle within the full range receiving a rotation force acting in a direction to be away from the first housing 11. The operation of the hinge device 100 will be explained in more detail below with reference to FIGs. 8 to 11.

FIG. 11 is a cam diagram illustrating the hinge shaft 201 mounted in the drive component 200 of the hinge device 100. In FIG. 11, the horizontal axis represents the angle of rotation of the second housing 23 with respect to the first housing 11, and the vertical axis represents the variation of the height of the hinge shaft 201. The cam diagram shows the location of the cam projection 221 on the mountain-shaped portion 211a or 211b or the valley-shaped portion 213a or 213b, which varies, according to the rotary angle of the second housing 23.

Assuming that the rotary angle of the second housing 23 is 0°C when ) closed to cover the first housing 11, the fold/unfold operation of the mobile terminal 10 and the corresponding operation of the hinge device 100 will be explained in further detail.

When the second housing 23 is closed, the cam projection 221 is located on the slope between the first valley-shaped portion 213a and the first mountain-shaped portion 211a (this location will be referred to as a "first point 31"). At this time, the drive component 200 generates a rotation force acting in a direction to locate the cam projection 221 at the first valley-shaped portion 213a. The rotation force makes the second housing 23 become closer to the first housing 11. Accordingly, the second housing 23 can be maintained in closed state that completely covers the first housing 11.

When the user rotates the second housing 23 to open the front surface of the first housing 11, the cam projection 221 moves to be adjacent to the first mountain-shaped portion 211a. At this time, the drive component 200 generates a rotation force acting in a direction to make the second housing 23 get closer to the first housing 11 until the cam projection 221 reaches the first mountain-shaped portion 211 a.

I When the user rotates the second housing 23 at an angle of 40° to 70°, the cam projection 221 passes the first mountain-shaped portion 211a and locates on the slope between the first mountain-shaped portion 211 a and the second valley-shaped portion 213b. The rotary angle of the second housing 23 that makes the cam projection 221 pass the first mountain-shaped portion 211a can be differently set according to mobile devices to which the hinge device of the present invention is applied. For example, to reduce the rotary angle of the second housing 23, the first point 21 at which the cam projection 221 locates during the closed state of the second housing 23 can be set to be adjacent to the first mountain-shaped portion 211a.

It is important that the drive component 200 should generate a rotation force sufficient to keep the second housing 23 in close contact with the first housing 11 even during the closed state of the second housing 23. This can be achieved by setting the cam projection 221 to locate on the slope between the first valley-shaped portion 213a and the first mountain-shaped portion 211a during the closed state of the second housing 23.

When the cam projection 221 passes the first mountain-shaped portion 211a and locates on the slope between the first mountain-shaped portion 211a and the second valley-shaped portion 213b, the drive component 200 generates a rotation force acting in a direction to locate the cam projection 221 at the second valley-shaped portion 213b. Due to this rotation force, the second housing 23 further rotates in a direction to be away from the first housing 11.

When opening the second housing 23, the stopper 123 moves along the stopper groove 133. The stopper groove 133 is designed to stop further movement of the stopper 123 when the stopper 123 moves through an angle of 150°.

As illustrates in FIG. 8, when the user rotates and opens the second housing 23 to an angle of 150°, the stopper 123 reaches a side end wall of the stopper groove 113 and its further movement is restricted. That is, the rotation of the second housing 23 is stopped at 150°. The location where the second housing 23 is stopped will be referred to as a "second point 32."

In a state that the second housing 23 is opened to an angle of 150°, the user can make or receive a telephone call using the mobile terminal 10. The rotary angle to open the second housing 23 can be adjusted to be smaller or larger according to the angle of circumference of the stopper groove 133 cut on the outer periphery of the hinge dummy 103.

Referring back to FIG. 11, when the second housing 23 is opened to a 150° angle, the cam projection 221 still locates on the second point 32 between the first mountain-shaped portion 211a and the second valley-shaped portion 213b. At this time, the drive component 200 generates a rotation force acting in a direction that the second housing 23 is getting away from the first housing 11.

As illustrated in FIG. 9, the user may press the push button 104 when the second housing 23 is opened to 150°. Then, the connection shaft 204 retreats into the hinge housing 101 and thereby pushes the cam housing 102. Also, the stopper 123 retreats into the hinge housing 101 and becomes released from the stopper groove 133. When the stopper 123 is completely released from the stopper groove 133, the second housing 23 further rotates to be away from the first housing 11 due to the rotation force generated by the drive component 200. That is, the second housing 23 is stopped once at a rotary angle of 150°. It can be further opened by the pressing of the push button 104. When the second housing 23 is opened to an angle of 180°, it is completely stopped by the interruption of the first housing 101.

Referring back to FIG. 11, when the second housing 23 is opened to an angle of 180°, the cam projection 221 still locates on the slope between the first mountain-shaped portion 211a and the second valley-shaped portion 213b. This location will be referred to as a "third point 33."

At this time, the drive component 200 generates a rotation force acting in a direction to locate the cam projection 221 at the second valley-shaped portion 213b. This rotation force acts in a direction to further rotate the second housing 23 over 180°. Due to the conflict between the rotation force generated by the drive component 200 and the interruption of the first housing 11, the second housing 23 can be maintained in a 180° opened state.

As described above, the user can primarily open the second housing 23 to an angle of 150° for a telephone call. If necessary, the user can further rotate and open the second housing 23 up to an angle of 180°. If the mobile terminal 10 is equipped with a fixed-type camera module, a 180° angle rotation of the second housing 23 will be convenient to take photographs.

More specifically, if the fixed-type camera module is mounted in the second housing 23, the 180° rotation of the second housing 23 will ensure the camera angle and the display viewing angle to be the same and facilitate the use of the keypad 13 on the first housing 11. Even if the camera module is mounted in the first housing 11, the consistency of the camera angle and the display viewing angle will enable the user to easily take photographs.

When closed, primarily opened to 150°, or completely opened to 180°, the second housing 23 is restricted to rotate by the interruption of the first housing 11 or the contact of the stopper 123 with a side end wall of the stopper groove 133. Even when the second housing 23 stops rotation, the rotation force from the drive component 200 continuously acts to restrict the second housing 23 from rotating, thereby ensuring stabilized use of the mobile terminal.

When the second housing 23 is opened over a predetermined angle, the display unit 23 and its backlighting device are activated. Similarly, when the second housing 23 is opened to an angle of 180°, the mobile terminal 10 can be set to automatically activate a camera mode. In this regard, a Hall sensor or a magnet sensor can be used to detect the opening of the second housing 23 to a predetermined angle.

When the second housing 23 is opened to 180°, the sensor detects the opening and generates a signal for changing the current mode of the mobile terminal 10 to the camera mode. In addition to the sensor, the push button 104 can be used as a mode changing switch. Because the push button 104 is pressed to rotate and open the second housing to 180°, a switch device can be provided between the hinge dummy 103 and the push button 104 to generate a mode changing signal according to the pressing of the push button 104. The switch device can be a dome switch or a tact switch, which is generally used in mobile phones.

Asdescribed above, the hinge device of the present invention enables the second housing 23 to rotate, stop rotation at least one time and rotate to a further angle within the full range (180°) receiving a rotation force acting in a direction that the second housing 23 is getting away from the first housing 11.

When the second housing 23 is primarily opened to an angle of 150°, the earpiece and mouthpiece of the mobile terminal are placed at appropriate locations on the user's ear and mouth for a telephone call. If the mobile terminal 10 is equipped with a fixed-type camera module, a 180° angle rotation of the second housing 23 will be convenient to take photographs. The mobile terminal 10 may use a Hall sensor or a magnetic sensor to automatically activate the camera mode when the second housing 23 is opened to 180°.

Although preferred embodiments of the present invention have been described for illustrative purposes, those skilled in the art will appreciate that various modifications, additions, and substitutions are possible, without departing from the scope of the present invention as disclosed in the accompanying claims, including the full scope of equivalents thereof.

## Claims

1. A hinge device (100) for rotatably connecting a second housing (23) to a first housing (11) of a mobile terminal (10), the hinge device comprising:
a hinge housing (101) mounted to the second housing (23);
a cam housing (102) received in the hinge housing (101) to be linearly movable and having a stopper (123) protruding outward from the hinge housing (101);
a drive component (200) received in the hinge housing (101) and adapted to generate a rotation force acting to move the second housing (23) away from the first housing (11) within a predetermined range of rotation, and
a hinge dummy (103) mounted to the first housing (11) and having a stopper groove (133) for restricting the movement of the stopper (123),
wherein there is a stop of rotation of said second housing (23) at least one time within said predetermined range of rotation by the restriction of movement of the stopper (103) by the stopper groove (133).

2. The hinge device according to claim 1, further comprising:
a push button (104) provided adjacent to the hinge dummy (103) to linearly move the cam housing (102), and
a first elastic means (191) interposed between the hinge dummy (103) and the push button (104) to generate an elastic force moving the push button away from the hinge dummy.

3. The hinge device according to claim 1, wherein said predetermined range of rotation is up to an angle of 180° in a direction away from the first housing and said stop of rotation is at an angle between 135° and 170°.

4. The hinge device according to claim 3, further comprising:
a push button (104) provided adjacent to the hinge dummy (103) to linearly move the cam housing (102),
wherein said stopper (103) is released from the stopper groove (133) by pressing the push button when there is the stop of rotation of the second housing at an angle between 135° and 170°.

5. The hinge device according to claim 1, further comprising:
a push button (104) provided adjacent to the hinge dummy (103) and a connection shaft (204) having one end being in contact with the push button and the other end supported by the inner wall of an end of the cam housing (102),
wherein pressing the push button (104) causes the connection shaft (204) to push the cam housing (102) and the stopper (123) to be released from the stopper groove (133).

6. The hinge device according to one of the previous claims, further comprising:
a second elastic means (192) mounted in the hinge housing (101) adapted to generate an elastic force acting to move the stopper (123) of the cam housing (102) outward from the hinge housing (101).

7. The hinge device according to one of the previous claims, wherein said hinge dummy (103) comprises a connection piece (135) extending outward from the outer periphery thereof.

8. The hinge device according to one of the previous claims, wherein said drive component (200) comprises:
a hinge shaft (201) rotatably received in the hinge housing (101) and having one end protruded outward from the hinge housing to be fixed to the hinge dummy (103), and
a hinge cam (202) linearly movable within the hinge housing (101) and receiving an elastic force acting in a direction towards the hinge shaft.

9. The hinge device according to claim 8, wherein said drive component (200) further comprises:
a third elastic means (209) adapted to generate an elastic force acting in a direction that the hinge cam (202) comes into contact with the hinge shaft (201),
wherein said third elastic means, hinge cam, and hinge shaft being sequentially inserted into the cam housing.

10. The hinge device according to one of the previous claims, wherein said drive component (200) comprises:
a connection shaft (204) penetrating into the hinge shaft (201) and the hinge cam (202), and having one end supported by the hinge shaft;
an E-ring (205) coupled to the other end of the connection shaft (204),
wherein said third elastic means (203) has one end supported by the E-ring (205) and the other end supported by the hinge cam (202) for generating an elastic force acting in a direction that the hinge cam comes into contact with the hinge shaft.

11. The hinge device according to one of the previous claims, wherein said drive component further comprises:
first and second mountain-shaped portions (211 a,b) formed at one end of the hinge shaft (201) and first and second valley-shaped portions (213a,b) defined therebetween, and
a cam projection (221) formed at one end of the hinge cam (202) and slidingly contacting a point between the first valley-shaped portion, first mountain-shaped portion, and the second valley-shaped portion with the rotation of the hinge shaft,
wherein said cam projection moves through an angle of 220° across the first valley-shaped portion, first mountain-shaped portion, and second valley-shaped portion with the rotation of the hinge shaft.

12. The hinge device according to claim 11, wherein said drive component (200) generates a rotation force in a direction moving the second housing towards the first housing when the cam projection (221) locates at a slope between the first valley-shaped portion (213a) and the first mountain-shaped portion (211a), and generates a rotation force in a direction moving the second housing away from the first housing, when the cam projection locates at a slope between the first mountain-shaped portion (211 a) and the second valley-shaped portion (213b).

13. The hinge device according to claim 11, wherein said cam projection (221) is positioned between the first valley-shaped portion (213a) and the first mountain-shaped portion (211a) when the second housing (23) is closed to cover the first housing (11), and is positioned between the first mountain-shaped portion (211a) and the second valley-shaped portion (213b) when the second housing is completely opened to an angle of 180°.

14. The hinge device according to one of the previous claims, wherein said hinge housing (101) comprises one opened end with a shaft hole (111), wherein said cam housing (102) has one end supported by the inner wall of the shaft hole.

15. The hinge device according to claim 14, wherein said hinge housing (101) further comprises a stopper hole (113) cut along the periphery of the shaft hole (111), wherein said stopper (123) of the cam housing (102) protrudes outward from the hinge housing through the stopper hole.

16. A hinge device for use in a mobile terminal (10) having a pair of housings (11,23), one of the housings is rotatable to and away from the other, the hinge device comprising:
a hinge housing (101);
a cam housing (102) received in the hinge housing to be linearly movable and having a stopper (123) protruded outward from the hinge housing (101);
a drive component (200) received in the hinge housing (101) for generating a rotation force;
a hinge dummy (103) having a stopper groove (133) for receiving said stopper to restrict its movement, and
a push button (104) for linearly moving the cam housing (102) and pushing the stopper (123) into the hinge housing to release it from the stopper groove,
wherein there is a stop of rotation of said housings at least one time by the restriction of movement of the stopper by the stopper groove within a full range receiving the rotation force in a direction that moves the housings away from each other.

17. The hinge device according to claim 16, wherein said stop of rotation is at an open angle between 135° and 170°.

18. The hinge device according to claim 16 or 17, wherein one of said housings (101,102) rotates up to an angle of 180° in a direction to be away from the other housing and receives said rotation force from the drive component (200) until the rotary angle of 180°.

19. The hinge device according to one of the claims 16 to 18, wherein by releasing of said stopper (123) by pressing the push button (104) one of the housings (101,102) is adapted to further rotate up to 180° by the rotation force from the drive component.

20. The hinge device according to one of the claims 16 to 19, further comprising:
an elastic means (192) received in the hinge housing (101) for generating an elastic force in a direction moving the stopper (123) of the cam housing (102) outward from the hinge housing (101).

21. The hinge device according to one of the claims 16 to 20, wherein said drive component (200) is first received in the cam housing (102) and then mounted together with it in the hinge housing (101).

22. The hinge device according to one of the claims 16 to 21, wherein said drive component (200) comprises a connection shaft (204) with one end being in contact with the push button (104) and the other end being in contact with the cam housing (102), such that pressing the push button causes the connection shaft to linearly move the cam housing.
